# EUROPEAN PATENT APPLICATION

(11) **EP 4 782 964 A1**
(43) Date of publication of application: **29.07.2026**
(21) Application number: 26153203.0
(22) Date of filing: 21.01.2026
(51) Int. Cl.: G06F 1/26, G06F 1/3206

(54) **POWER SUPPLY SYSTEM AND POWER SUPPLY DEVICE**

(30) Priority: 23.01.2025 JP 2025009878
(71) Applicant: Panasonic Intellectual Property Management Co., Ltd., Kadoma-shi, Osaka 571-0057 (JP)
(72) Inventor: SETO, Kenji, Osaka, 571-0057 (JP); MASATOKI, Keisuke, Osaka, 571-0057 (JP); SAKAGUCHI, Yosuke, Osaka, 571-0057 (JP)
(74) Representative: Eisenführ Speiser

(57) **Abstract**

A power supply system includes: a first housing including a USB port to which a USB device is to be connected, and a first processor that controls supply of power to the USB port; and a second housing including an AC power port through which AC power is supplied, and a second processor, the second housing being different from the first housing and connected to the first housing to supply power to the first housing. When the second processor detects that supply of the AC power through the AC power port has started, the second processor transmits, to the first processor, a notification that the supply of the AC power has started, via multicast at a network layer or broadcast at a data link layer, and limits the supply of the power to the USB port.

## Description

### Field

The present disclosure relates to power supply systems and power supply devices that supply AC power and DC power.

### Background

Patent Literature (PTL) 1 discloses a power supply device that supplies both AC power and DC power.

### Citation List

### Patent Literature

PTL 1: Japanese Unexamined Patent Application Publication No. 2007-336797

### Summary

### Technical Problem

The present disclosure provides a power supply system and a power supply device that make it possible to supply AC power and DC power stably .

### Solution to Problem

A power supply system in the present disclosure includes: a first housing that includes a USB port to which a USB device is to be connected, and a first processor that controls supply of power to the USB port; and a second housing that includes an AC power port through which AC power is supplied, and a second processor, the second housing being different from the first housing and connected to the first housing to supply power to the first housing. When the second processor detects that supply of the AC power through the AC power port has started, the second processor transmits, to the first processor, a notification that the supply of the AC power has started, via multicast at a network layer or broadcast at a data link layer. When the first processor receives the notification, the first processor limits the supply of the power to the USB port.

A power supply device in the present disclosure is connected to a first housing including a USB port to which a USB device is to be connected, and supplies power to the first housing, the power supply device including: an AC power port through which AC power is supplied; and a second processor. When the second processor detects that supply of the AC power through the AC power port has started, the second processor transmits, to the first housing, a notification that the supply of the AC power has started, via multicast at a network layer or broadcast at a data link layer.

### Advantageous Effects

The power supply device in the present disclosure enhances the stability of the supply of AC power and DC power.

### Brief Description of Drawings

**[****FIG. 1****]**

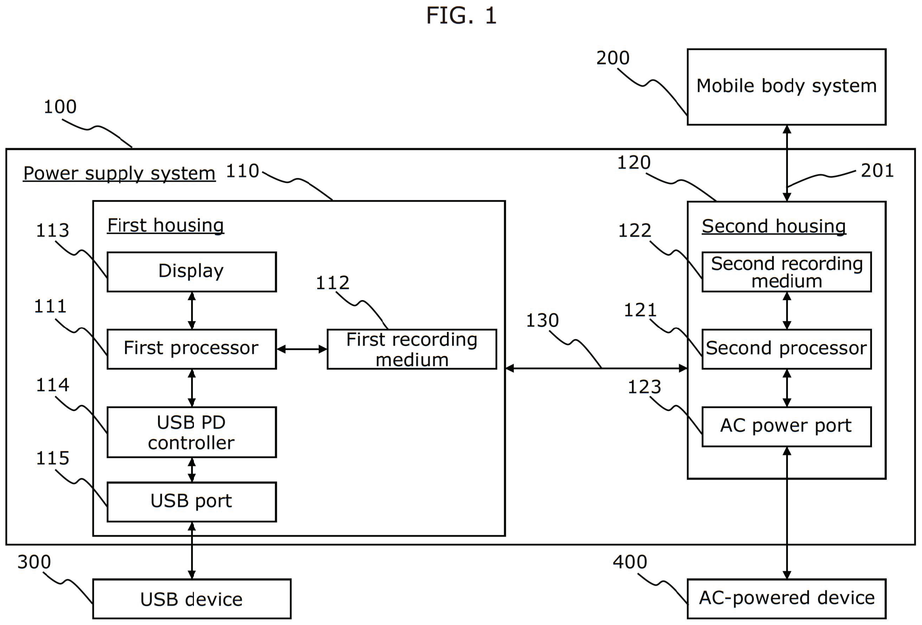

   FIG. 1 is a block diagram illustrating a configuration of a power supply system according to an embodiment.
**[****FIG. 2****]**

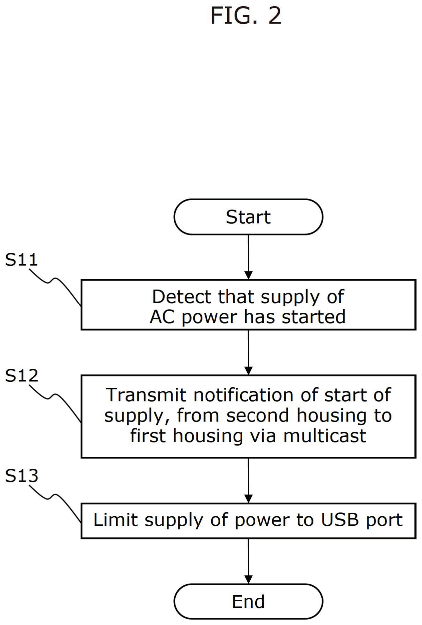

   FIG. 2 is a flowchart when the power supply system according to the embodiment detects that the supply of AC power supply has started.
**[****FIG. 3****]**

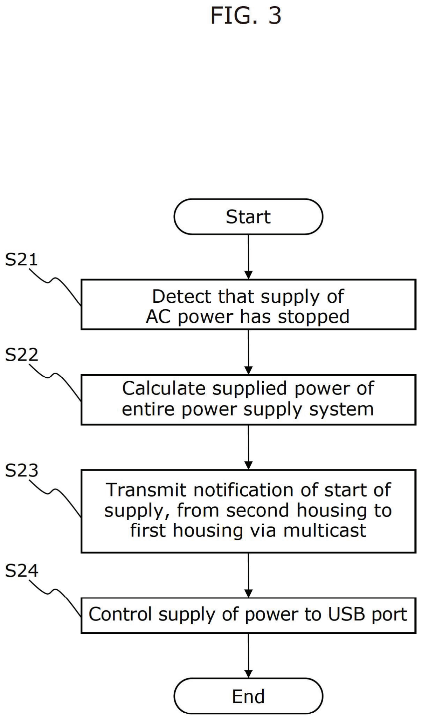

   FIG. 3 is a flowchart when the power supply system according to the embodiment detects that the supply of AC power has stopped.

### Description of Embodiments

Hereinafter, an embodiment is described in detail with reference to the Drawings as necessary. However, there are instances where excessively detailed description is omitted. For example, details regarding known facts or duplicate explanation of essentially identical configurations may be omitted. This is to make the following description easier for a person skilled in the art to understand and avoid redundancy.

It should be noted that the appended drawings and the following descriptions are provided to facilitate sufficient understanding of the present disclosure for a person skilled in the art, and are not intended to limit the scope of the claims.

### (Circumstances Leading to the Present Disclosure)

When a passenger charges a portable electronic device at a seat on an airplane, various methods for charging an electronic device are conceivable.

For example, in the case of an electronic device (hereinafter referred to as a USB device) charged via a USB such as a smartphone, a USB PD controller provided in the seat supplies necessary power as DC power (direct-current power) in accordance with power requested by the USB device. Additionally, in the case of an electronic device (hereinafter referred to as an AC-powered device) charged from an AC power source (alternating-current power source) such as a laptop computer, power is supplied through an AC power port such as an outlet provided in the seat. As stated above, unlike the supply of power via the USB, in the case of the AC power port, power is not supplied in accordance with power requested by an electronic device, but power in accordance with the output rating of an AC device is supplied at the moment when the electronic device is connected to a power source.

For this reason, when power is also supplied through an AC outlet while power is supplied to the USB device, total power including the power supplied to the USB device may exceed the upper limit of available power assigned per seat. In view of this, it is necessary to immediately detect the connection to the AC outlet and adjust the supply of power to the USB device.

On the other hand, from the viewpoint of spatial constraints in the airplane and the convenience of passengers, it is assumed that a housing including a USB port and a housing including an AC power port are configured as separate housings and disposed at different positions. When communication between these separate housings is performed via an Ethernet (registered trademark) cable, it is necessary to notify a housing to which USB power is to be supplied that the connection to an AC outlet has been detected.

However, when the communication between the housings is performed via unicast as expected in generic Transmission Control Protocol (TCP)/Internet Protocol (IP) communication, a response for confirming whether the communication between the housings has been normally performed is generated. As a result, it takes time to perform the communication between the housings, and the limitation of power to be supplied via a USB is not completed in time. For this reason, for example, when the upper limit per person is exceeded, an operation such as interruption of power supply output by a relay circuit is performed, and the operation of a housing is suspended.

In view of this, the inventors have conceived a mechanism that enables a housing to immediately detect that a passenger's electronic device has been connected to an AC power port.

Specifically, a power supply system proposed by the inventors includes a first housing including a USB port and a second housing including an AC power port. In the power supply system, when the second housing detects that the supply of AC power through the AC power port has started, the second housing transmits, to the first housing, a notification that the supply of the AC power has started, via multicast at the network layer or broadcast at the data link layer. When the first housing receives the notification from the second housing, the first housing limits the supply of power to the USB port.

As stated above, whether communication between a plurality of housings has been normally performed is not confirmed by performing communication between the plurality of housings that indicates that the supply of AC power has started. Accordingly, since it is possible to supply power to the USB port immediately after the first housing receives the notification from the second housing, it is possible to control the supply of power to the AC power port and the USB port without exceeding the upper limit of available power assigned per seat.

### Embodiment

### [1-1. Configuration]

Hereinafter, a power supply system according to an embodiment of the present disclosure is described with reference to FIG. 1. FIG. 1 is a block diagram illustrating a configuration of the power supply system according to the embodiment.

Power supply system 100 is a system that is provided in a mobile body such as an airplane and supplies power to passengers' devices. Power supply system 100 is connected to mobile body system 200 via first cable 201, and makes it possible to communicate with mobile body system 200 and receive power from mobile body system 200. In addition, power supply system 100 is connectable to passenger's devices such as USB device 300 compliant with the Universal Serial Bus (USB) specification and AC-powered device 400 to which AC power is supplied, and makes it possible to control the supply of power to these devices. Although a plurality of power supply systems 100 are connected to mobile body system 200, FIG. 1 illustrates, among the plurality of power supply systems 100, one power supply system 100 as a representative.

Power supply system 100 includes first housing 110 and second housing 120, and first housing 110 and second housing 120 are connected via second cable 130.

First housing 110 is, for example, a monitor that displays an image viewed by a passenger such as content from an in-flight entertainment system or a flight map. First housing 110 is disposed around a seat and makes it possible to supply power to USB device 300 the passenger connected to first housing 110.

Additionally, first housing 110 includes first processor 111, first recording medium 112, display 113, USB PD controller 114, and USB port 115. It should be noted that although an example in which first housing 110 includes display 113 is described below, first housing 110 may be configured not to include display 113. As long as first housing 110 is configured to supply power to passenger's USB device 300 through USB port 115 provided around the seat, first housing 110 is not limited to the above configuration.

First processor 111 is a processor that controls first housing 110. First processor 111 controls, for example, the supply of power to USB device 300 connected to USB port 115. For example, first processor 111 includes a digital signal processor (DSP), a central processing unit (CPU), or a field programmable gate array (FPGA).

First recording medium 112 is, for example, a semiconductor memory such as a random-access memory (RAM) or a read-only memory (ROM). It should be noted that first recording medium 112 may be, for example, a recording medium such as a flash memory, a hard disk drive (HDD), or a solid-state drive (SSD). First recording medium 112 stores, for example, programs and data necessary for first processor 111 to perform various types of processing. It should be noted that first recording medium 112 may include a non-transitory computer-readable tangible recording medium that records processes to be performed by first processor 111.

Display 113 is, for example, a liquid-crystal display or an organic electroluminescent (EL) display. Display 113 is operated by the passenger seated in the seat, using a touch panel (not illustrated in the figure) on a screen or a remote controller (not illustrated in the figure) disposed around the seat. Display 113 is directly operated without using second processor 121 connected to display 113 via second cable 130. Additionally, display 113 displays an image viewed by the passenger such as content from the in-flight entertainment system or a flight map. It should be noted that display 113 may be attached to the rear surface of the backrest of a seat in the mobile body, and is not limited to the above position as long as display 113 is disposed at a position corresponding to the seat.

USB PD controller 114 is hardware that controls, in accordance with the USB Power Delivery (PD) specification, power to be supplied to USB port 115. First processor 111 sets, for USB PD controller 114, an upper limit value of power to be supplied or the like, using I2C communication. In addition, by receiving a command from first processor 111, USB PD controller 114 makes it possible to perform an operation such as resetting or controlling the amount of power to be supplied.

USB port 115 is, for example, a USB Type-A connector or a USB Type-C connector. When USB device 300 is connected to USB port 115, first housing 110 makes it possible to supply, as DC power, power compliant with the USB specification to USB device 300 described later. For example, first housing 110 supplies power at a predefined value of 2.5 W in the case of the USB 2.0 specification, and supplies power at a predefined value of 4.5 W in the case of the USB 3.0 specification. Additionally, when USB device 300 is compliant with the USB PD specification, first housing 110 makes it possible to supply power at a value that varies up to a maximum of 100 W or 240 W. At this time, USB PD controller 114 communicates with USB device 300, and first housing 110 supplies corresponding power to USB device 300, based on a result of the communication. It should be noted that the number of USB ports 115 is not limited to one, and a plurality of USB ports 115 may be provided.

USB device 300 is, for example, a device connectable to USB port 115, such as a smartphone or a laptop computer. As described above, USB device 300 receives, as the DC power, the power compliant with the USB specification from first housing 110. It should be noted that USB device 300 may be connected to USB port 115 via, for example, an external cable.

Second housing 120 is a power supply unit that receives power from mobile body system 200, and is disposed at a position inaccessible to the passenger during normal flight, such as a position under the seat. Second housing 120 includes second processor 121, second recording medium 122, and AC power port 123. Second housing 120 converts the power received from mobile body system 200 into DC power to be supplied to first housing 110 and AC power to be supplied to AC power port 123. There is a limit to a total amount of power to be supplied from mobile body system 200, and second processor 121 adjusts power to be supplied from second housing 120 by an operation described below.

Second processor 121 is a processor that controls second housing 120. Second processor 121 controls, for example, the supply of power to passenger's AC-powered device 400 which is connected to AC power port 123. In addition, second processor 121 communicates with first processor 111 via second cable 130, and supplies power to first housing 110 via second cable 130. For example, second processor 121 includes a DSP, a CPU, or a FPGA.

Second recording medium 122 stores, for example, programs and data necessary for second processor 121 to perform various types of processing. For example, second recording medium 122 is a semiconductor memory such as a RAM or a ROM. It should be noted that second recording medium 122 may be a recording medium such as a flash memory, a HDD, or a solid-state drive (SSD). It should be noted that second recording medium 122 may include a computer-readable tangible recording medium that records processes to be performed by second processor 121.

AC power port 123 is a port that enables the supply of power to AC-powered device 400 that operates on a passenger's AC power source. AC power port 123 includes a slot at a position accessible to the passenger around the seat. It should be noted that the slot of AC power port 123 may be disposed around the seat via, for example, a cable. When an electric circuit is connected to AC power port 123 by inserting a plug of AC-powered device 400 into AC power port 123, AC power is supplied through AC power port 123 to AC-powered device 400 in accordance with power designed for each device, without, for example, communicating with second housing 120.

When AC-powered device 400 is connected to AC power port 123, second processor 121 detects that the supply of the AC power through AC power port 123 has started, using a general-purpose input/output (GPIO).

Since AC-powered device 400 does not communicate with second housing 120 and receives power via circuit connection, second housing 120 does not detect the supplied power until the AC power is supplied. For this reason, when AC-powered device 400 is connected to AC power port 123, it is necessary to control a total amount of power to be supplied by second housing 120, via processing described later in [1-2. Operation].

Input using a GPIO is a mechanism for detecting whether a voltage higher than or equal to a set threshold value is inputted and identifying a binary corresponding to the voltage. For example, when a voltage detected at a port of predetermined hardware of second processor 121, the voltage is determined to be "HIGH"; and when a voltage is not detected at the port of the predetermined hardware of second processor 121, the voltage is determined to be "LOW". In other words, a voltage is detected at the GPIO, based on a binary.

For example, a configuration for performing detection using a GPIO is achieved by connecting, as hardware, a circuit of AC power port 123 to a predetermined port of second processor 121 that enables detection using a GPIO.

It should be noted that a sensor capable of physically detecting the insertion of a plug into AC power port 123 may be provided to AC power port 123, second processor 121 may detect that the supply of AC power has started. Second processor 121 is not limited to this configuration.

The input using the GPIO is to make a determination using a binary based on a threshold value of a voltage. In a scheme for performing communication using a value exceeding a binary, such as an I2C communication scheme, in response to a signal indicating that a plug has been inserted into AC power port 123, it is necessary to identify a data structure. For this reason, in such a communication scheme, although it takes time to process data, whether a voltage value of a port exceeds a predetermined threshold value needs only to be determined using the GPIO. Accordingly, by using the GPIO, second processor 121 makes it possible to more quickly detect that the supply of AC power has started.

AC-powered device 400 is, for example, a device operable on a passenger's AC power source. When connected to AC power port 123, AC-powered device 400 receives power in accordance with power designed for the device.

Second cable 130 is a cable that connects first housing 110 and second housing 120. Second cable 130 includes at least a power cable for first housing 110 to receive DC power from second housing 120, and a communication cable for performing communication between first housing 110 and second housing 120. For example, the communication cable may be a cable that enables communication at the data link layer or the network layer. For example, second cable 130 is an Ethernet cable or a cable that enables IP communication, and desirably, second cable 130 is a cable that enables communication at the network layer.

It should be noted that second cable 130 may further include a video cable for second processor 121 to operate display 113 of first housing 110. For example, the video cable may be a High-Definition Multimedia Interface (HDMI) (registered trademark) cable or a cable that enables serial communication such as a Gigabit Multimedia Serial Link (GMSL) (registered trademark) cable.

Mobile body system 200 is a system that controls each of a plurality of devices disposed in an entire mobile body such as an airplane, supplies power to the device, distributes content from an in-flight entertainment system to the device, and the like. For example, content from the in-flight entertainment system stored in mobile body system 200 is distributed to first housing 110 via second housing 120.

Mobile body system 200 is connected to second housing 120 via first cable 201.

Power supply system 100 communicates with mobile body system 200 and receives power from mobile body system 200 via first cable 201. For example, first cable 201 may include a plurality of cables such as Ethernet cables or power cables for supplying power. It should be noted that first cable 201 may be achieved by one cable, and as long as first cable 201 has a function of achieving communication at the data link layer or the network layer and the supply of power, first cable 201 is not limited to the above configuration. Additionally, first cable 201 may be used only for the supply of power, only second cable 130 may be configured to perform wired communication, and second housing 120 and mobile body system 200 or first housing 110 and mobile body system 200 may be configured to communicate with each other using wireless communication such as Wi-Fi.

It should be noted that first housing 110, second housing 120, and mobile body system 200 may form a common network via, for example, a network switch. It should be noted that a network switch may be provided in second housing 120, and a network via first cable 201 and second cable 130 may be connected to second housing 120.

### [1-2. Operation]

Hereinafter, operations of power supply system 100 are described with reference to FIG. 2 and FIG. 3.

First, operations when the plug of passenger's AC-powered device 400 is inserted into AC power port 123 are described with reference to FIG. 2. FIG. 2 is a flowchart for describing the operations of power supply system 100 when power supply system 100 detects that the supply of AC power to passenger's AC-powered device 400 has started. Since available energy for the mobile body such as the airplane is limited, there is also an upper limit to power suppliable from power supply system 100 to one passenger. For this reason, when power supply system 100 detects that the supply of the AC power has started, power supply system 100 balances the supply of power among passengers including AC power sources and DC power sources such as USB ports.

First, second housing 120 detects that the supply of AC power has started (S11). Specifically, when a plug of AC-powered device 400 is inserted into AC power port 123, by detecting the insertion of the plug of AC-powered device 400, using the GPIO, second processor 121 may detect that the supply of the AC power has started. It should be noted that that the supply of the AC power has started may be determined by detecting the insertion of the plug of AC-powered device 400 using a means such as a sensor, and the present disclosure is not limited to this method. However, since the GPIO enables detection with a simple process and reduced processing time in comparison with, for example, a case of communicating with a sensor, it is desirable to use the GPIO.

Next, in response to detecting that the supply of the AC power has started in S11, second housing 120 transmits, to first housing 110, a notification indicating that the supply of the AC power has started, via multicast at the network layer (S12). Specifically, second processor 121 communicates with first processor 111 via multicast in IP communication.

Here, the multicast in IP communication is a communication scheme for simultaneously transmitting data to devices to which addresses in a predetermined range are assigned.

Except for a case in which signals from other than first housing 110 or second housing 120 are relayed by second processor 121 such as making an announcement from mobile body system 200 to seats, unicast at the data link layer or the network layer is used in communication of an instruction from first processor 111 to second processor 121 other than the supply of the AC power. When unicast is used for communication, first processor 111 waits until first processor 111 receives an acknowledgement for communication from second processor 121, performs bidirectional communication, and subsequently transmits data. In contrast, when multicast is used for communication, first processor 111 makes it possible to transmit data without waiting to receive an acknowledgement from second processor 121. For this reason, by performing communication via multicast, it is possible to reduce a communication time for a notification transmitted from first processor 111 to second processor 121.

It should be noted that the notification indicating that the supply of the AC power has started in S12 may be data, as a flag, representing that the supply of the AC power has started, or may be an instruction for first housing 110 to perform control corresponding to that the supply of the AC power has started.

Then, in response to receiving the notification indicating that the supply of the AC power from second housing 120 has started in S12, first housing 110 controls the supply of power to USB port 123 (S13). Specifically, first processor 111 causes USB PD controller 114 to reduce the amount of power regardless of the amount of power that has been supplied. Here, the operation of reducing the amount of power includes an operation of temporarily suspending power. As the operation of reducing the amount of power, for example, first processor 111 hard-resets each of ports of USB PD controller 114. In this case, the supply of power through USB port 123 is temporarily suspended, the power is reduced to 4.5 W that is a default set value of USB PD controller 114, and the supply of the power is resumed. Alternatively, the operation of reducing the amount of power by first processor 111 may be performed not by hard-resetting each port of USB PD controller 114 but by configuring the port of USB PD controller 114 to reduce the maximum power to be supplied. It should be noted that since hard-resetting each port takes a shorter time to affect an operation than reducing the maximum power to be supplied from USB PD controller 114 by reconfiguring, the hard-resetting is desirable. In addition, as long as USB PD controller 114 is caused to reduce the amount of power, the operation of supplying DC power via first housing 110 by first processor 111 is not limited to the above example.

It should be noted that as the operation in S13, second processor 121 may control the supply of the power by performing the next operation after causing USB PD controller 114 to reduce the amount of power.

First processor 111 and second processor 121 perform, via unicast, communication relating to a setting for the supply of the power through USB port 115.

First, for example, second processor 121 obtains, from first processor 111, information relating to the supply of the power at USB port 115. Here, as long as the information relating to the supply of the power at USB port 115 is, for example, the amount of power supplied at USB port 115 before temporary suspension or information for calculating the supplied power of entire power supply system 100 such as information relating to USB device 300 with which USB PD controller 114 is communicating, the information relating to the supply of the power at USB port 115 is not limited to the above example.

Next, second processor 121 may calculate supplied power including at least power supplied through AC power port 123 and power supplied through USB port 115. In this case, second processor 121 performs communication to cause first processor 111 to control power to be supplied from USB PD controller 114. As the communication, for example, second processor 121 may transmit information relating to the maximum value of power suppliable from USB PD controller 114. Accordingly, it is possible to set the maximum value of power to be supplied from USB PD controller 114 to an appropriate value while maintaining stable operation of power supply system 100.

As stated above, when power supplied to first processor 111 is reconfigured, it is possible to perform more stable control of the supply of power by using unicast for communication between first processor 111 and second processor 121. It should be noted that the information relating to the maximum value of the power suppliable from USB PD controller 114 may be a value of a current or a voltage supplied to control power.

Additionally, power supply system 100 is allowed to operate stably by first processor 111 and second processor 121 performing, via multicast, communication for temporarily suspending the supply of power through USB portion 115 required to perform an immediate operation, and performing, via unicast, communication for reconfiguring the supply of power through the transmission and reception of information.

It should be noted that second processor 121 in S13 may use broadcast at the data link layer instead of multicast at the network layer. In the broadcast at the data link layer, although it is unnecessary to wait for an acknowledgement from a communication partner, the amount of communication in a connected network is increased. Consequently, it is desirable to use the multicast at the network layer.

The following describes, with reference to FIG. 3, the operation of supplying power through USB port 115 when the supply of AC power from second housing 120 stops such as when the plug of AC-powered device 400 of the passenger is removed from AC power port 123. FIG. 3 is a flowchart for describing the operations of power supply system 100 when power supply system 100 detects that the supply of AC power to passenger's AC-powered device 400 has stopped. When both AC power and DC power are managed as described in association with the operations in FIG. 2, it is necessary to control output from USB port 115 that is a DC power source. For this reason, by controlling the supply of power to USB port 115 when it becomes unnecessary to supply power to AC-powered device 400, it is possible to efficiently supply power to passenger's USB device 300. It should be noted that the operations in FIG. 3 may be performed subsequent to the operation in S13.

First, second housing 120 detects that the supply of AC power has stopped (S21). For example, second housing 120 detects that the supply of the AC power has stopped, by detecting that the plug of AC-powered device 400 has been removed. The removal of the plug may be detected by, for example, second processor 121 using the GPIO, or may be detected by a sensor provided to second housing 120, the sensor being capable of obtaining a state of the supply of power in AC power port 123 or the connection state of the plug.

Next, in response to detecting that the supply of the AC power has stopped in S21, second housing 120 calculates power supplied in power supply system 100 (S22). Specifically, second processor 121 calculates maximum power suppliable from first housing 110 to USB device 300, based on a total amount of power consumed including at least power supplied through AC power port 123 and power supplied through USB port 115 at present. In S22, when calculating power, second housing 120 may receive, from first housing 110, information relating to the supply of the power at USB 115 via unicast and perform the calculation.

Then, second housing 120 transmits, to first housing 110, information relating to the maximum power suppliable from first housing 110 to USB device 300 calculated in S22 (S23). Specifically, second processor 121 transmits a notification to first processor 111 via unicast. After that, first housing 110 controls the amount of power to be supplied through USB port 115, based on the notification received from second housing 120 in S23 (S24). Specifically, first processor 111 controls USB PD controller 114 by reconfiguring the maximum amount of power suppliable through USB port 115.

As described above, by first processor 111 and second processor 121 performing communication via the unicast when the plug of AC-powered device 400 is removed from AC power port 1232, it is possible to supply power through USB port 115 stably using USB PD, regardless of the attachment or removal of AC-powered device 400.

### [1-3. Advantageous Effects, Etc.]

As stated above, in the embodiment, power supply system 100 includes: first housing 110 that includes USB port 115 to which USB device 300 is to be connected, and first processor 111 that controls supply of power to USB port 115; and second housing 120 that includes AC power port 123 through which AC power is supplied, and second processor 121, second housing 120 being different from first housing 110 and connected to first housing 110 to supply power to first housing 110. When second processor 121 detects that supply of the AC power through AC power port 123 has started, second processor 121 transmits, to first processor 120, a notification that the supply of the AC power has started, via multicast at the network layer or broadcast at the data link layer. Additionally, when first processor 111 receives the notification that the supply of the AC power has started, first processor 111 limits the supply of the power to USB port 115.

In transmitting the notification that the supply of the AC power has started, when first processor 111 and second processor 121 communicate with each other via unicast, it takes time to complete a single transmission and reception because a receiver generally returns an acknowledgement. In view of this, since an acknowledgement from a receiver is not awaited in the multicast at the network layer or the broadcast at the data link layer, the multicast at the network layer or the broadcast at the data link layer makes it possible to reduce a transmission and reception time for a notification, compared to unicast.

Consequently, by performing communication between first housing 110 and second housing 120 provided separately from first housing 110 via the multicast at the network layer or the broadcast at the data link layer instead of the unicast, it is possible to minimize a delay occurring in the communication.

Accordingly, even when a housing including an AC power port is different from a housing including a USB port, and there is a limit to the amount of power of an entire power supply system, it is possible to stably supply power to passengers' devices.

Moreover, in the embodiment, second housing 120 may further detect the supply of the AC power, using a GPIO. Although it is possible to use an I2C or an ADC to detect electrical attachment or removal of AC-powered device 400, when they are used, a plurality of additional ICs and electric components are required. For this reason, it is possible to reduce the number of components by performing detection using the GPIO. In addition, by using the GPIO to detect attachment or removal, it is possible to process data quickly, compared to, for example, a detection method using the I2C or the ADC. Accordingly, compared to a case in which the GPIO is not used, it is possible to control the supply of power through USB port 115 more quickly and operate power supply system 100 more stably.

Furthermore, after second processor 121 transmits the notification that the supply of the AC power has started, second processor 121 may perform, via unicast, communication with first processor 111, the communication relating to a setting for the supply of the power to USB port 115. In this manner, even when USB port 115 is immediately and temporarily suspended to avoid causing an impact on entire power supply system 100, it is possible to set the amount of power to be supplied through USB port 115 to a more appropriate value according to a connection status of USB device 300 and AC-powered device 400.

Moreover, in power supply system 100 in the embodiment, the supply of the power to USB port 115 may be controlled in accordance with a USB PD specification. This makes it possible to increase the maximum amount of power to be supplied, compared to the USB 2.0 or USB 3.0 specification. It should be noted that with regard to the supply of the power to USB port 115, as long as a control method makes it possible to increase the maximum amount of power to be supplied, compared to the USB 2.0 or USB 3.0 specification, the control method is not limited to the above example.

Furthermore, power supply system 100 in the embodiment may further include USB PD controller 114 that is connected to first processor 111. When first processor 111 receives the notification that the supply of the AC power has started, first processor 111 limits the supply of the power to USB port 115 by hard-resetting USB PD controller 114. In this case, since it is possible to temporarily suspend the supply of the power to USB port 115, it is possible to perform stable control to avoid excessive supply of power. Additionally, in this case, it is possible to further reduce a time it takes to affect the supply of the power to USB port 115.

Moreover, in power supply system 100 in the embodiment, when second processor 121 detects that the supply of the AC power through AC power port 123 has stopped, second processor 121 may transmit, to first processor 111, information relating to a maximum value of power suppliable to USB port 115.

Furthermore, in power supply system 100 in the embodiment, second processor 121 may transmit, to first processor 111, the information relating to the maximum value of the power suppliable to USB port 115 via unicast. In this case, it is possible to control first housing 110 more stably.

Moreover, power supply system 100 in the embodiment may include one or more first housings 110, and second processor 121 may perform communication, via multicast, using an address including only one or more first processors 111. Since it is possible to transmit multicast packets only to a pre-set group, it is also possible to minimize a strain on a network bandwidth.

Furthermore, power supply system 100 in the embodiment may include only one first housing 110, and second processor 121 may perform communication, via multicast, using an address including only one first housing 110. In this case, even when transmission to one first housing 110 is performed, it is possible to perform the transmission without waiting for an acknowledgement, compared to unicast.

Moreover, power supply system 100 in the embodiment may include a plurality of first housings 110, and second processor 121 may perform communication, via multicast, using an address including the plurality of first housings 110. In this case, even when the plurality of first housings 110 are connected to second housing 120, it is possible to simultaneously transmit a notification to the plurality of first housings 110, and control power supply system 100 more stably.

### (Other Embodiments)

As described above, the embodiment is described as an exemplification of the technique disclosed in the present application. However, the techniques disclosed in the present disclosure are not limited to these examples; modifications, replacements, additions, and omissions may be made. Moreover, various elements described in the above embodiments may be combined to achieve a new embodiment.

Moreover, although the example in which one first housing 110 is connected to one second housing 120 is described in the embodiment, a plurality of first housings 110 may be connected to one second housing 120. In this case, the plurality of first housings 110 may be configured to include a housing including display 113 and a housing not including display 113.

Furthermore, although the example in which one USB device 300 is connected to USB port 115 is described in the embodiment, a plurality of USB devices 300 may be connected to USB port 115. In addition, although the example in which one AC-powered device 400 is connected to AC power port 123 is described, a plurality of AC-powered devices 400 may be connected to AC power port 123.

It should be noted that since the above-described embodiment illustrates the techniques disclosed in the present disclosure, various modifications, substitutions, additions, and omissions, etc. can be carried out within the scope of the Claims or equivalents thereof.

### Industrial Applicability

The present disclosure is applicable to power supply devices in which each of a plurality of housings supplies power.

### Reference Signs List

- 100: power supply system
- 110: first housing
- 111: first processor
- 112: first recording medium
- 113: display
- 114: USB PD controller
- 115: USB port
- 120: second housing
- 121: second processor
- 122: second recording medium
- 123: AC power port
- 130: second cable
- 200: mobile body system
- 201: first cable
- 300: USB device
- 400: AC-powered device

## Claims

1. A power supply system comprising:
a first housing that includes a USB port to which a USB device is to be connected, and a first processor that controls supply of power to the USB port; and
a second housing that includes an AC power port through which AC power is supplied, and a second processor, the second housing being different from the first housing and connected to the first housing to supply power to the first housing,
wherein when the second processor detects that supply of the AC power through the AC power port has started, the second processor transmits, to the first processor, a notification that the supply of the AC power has started, via multicast at a network layer or broadcast at a data link layer, and
when the first processor receives the notification, the first processor limits the supply of the power to the USB port.

2. The power supply system according to claim 1,
wherein the second processor detects the supply of the AC power, using a GPIO.

3. The power supply system according to claim 1,
wherein the notification is transmitted via the multicast at the network layer.

4. The power supply system according to claim 3,
wherein the second processor transmits the notification via multicast in accordance with an Internet Protocol.

5. The power supply system according to claim 1,
wherein after the notification is transmitted and received, the first processor and the second processor perform, via unicast, communication relating to a setting for the supply of the power to the USB port.

6. The power supply system according to claim 1,
wherein the supply of the power to the USB port is controlled in accordance with a USB PD specification.

7. The power supply system according to claim 1, further comprising:
a USB PD controller that is connected to the first processor,
wherein when the first processor receives the notification, the first processor limits the supply of the power to the USB port by hard-resetting the USB PD controller.

8. The power supply system according to claim 1,
wherein when the second processor detects that the supply of the AC power through the AC power port has stopped, the second processor transmits, to the first processor, information relating to a maximum value of power suppliable to the USB port.

9. The power supply system according to claim 8,
wherein the second processor transmits the information to the first processor via unicast.

10. The power supply system according to claim 1,
wherein the second processor performs communication, via multicast, using an address including only one or more first processors each of which is the first processor.

11. The power supply system according to claim 1,
wherein the second processor performs communication, via multicast, using an address including only one first processor that is the first processor.

12. The power supply system according to claim 1,
wherein the second processor performs communication, via multicast, using an address including a plurality of first processors each of which is the first processor.

13. A power supply device that is connected to a first housing including a USB port to which a USB device is to be connected, and supplies power to the first housing, the power supply device comprising:
an AC power port through which AC power is supplied; and
a second processor,
wherein when the second processor detects that supply of the AC power through the AC power port has started, the second processor transmits, to the first housing, a notification that the supply of the AC power has started, via multicast at a network layer or broadcast at a data link layer.
